# EUROPÄISCHE PATENTSCHRIFT

(11) **EP 3 594 969 B1**
(45) Veröffentlichungstag und Bekanntmachung des Hinweises auf die Patenterteilung: **28.02.2024**
(21) Anmeldenummer: 18182655.3
(22) Anmeldetag: 10.07.2018
(51) Int. Cl.: H01B 3/30, H01B 13/16, H01B 3/42, C09D 5/04, C09D 179/08, H01B 13/06

(54) **VERFAHREN ZUR HERSTELLUNG EINES MIT ELEKTROISOLIERLACK BESCHICHTETEN LEITERDRAHTES UND ELEKTROISOLIERLACK**
METHOD FOR PRODUCING A CONDUCTOR WIRE COATED WITH ELECTRO-INSULATING ENAMEL AND ELECTRO-INSULATING ENAMEL
PROCÉDÉ DE FABRICATION D'UN FIL CONDUCTEUR REVÊTU DE VERNIS ISOLANT ÉLECTRIQUE ET VERNIS ISOLANT ÉLECTRIQUE

(43) Veröffentlichungstag der Anmeldung: 15.01.2020
(73) Patentinhaber: Schwering & Hasse Elektrodraht GmbH, 32676 Lügde (DE)
(72) Erfinder: REICHER, Johann, 31848 Bad Münder (DE); HAASE, Roxana, 31812 Bad Pyrmont (DE)
(74) Vertreter: Andrejewski - Honke Patent- und Rechtsanwälte Partnerschaft mbB

(56) Entgegenhaltungen:
- AT-B- 278 940
- DE-A1-102012 111 372
- JP-B2- 5 674 026
- US-A1- 2011 171 368
- US-A1- 2012 241 191

## Beschreibung

Die Erfindung betrifft ein Verfahren zur Herstellung eines mit Elektroisolierlack beschichteten Leiterdrahtes, wobei die Oberfläche eines Leiterdrahtes mit zumindest zwei Lackschichten des Elektroisolierlackes beschichtet wird.

Verfahren der eingangs genannten Art sind aus der Praxis und aus dem Stand der Technik in unterschiedlichen Ausführungsformen grundsätzlich bekannt. DE 10 2012 111 372 A1 beschreibt einen Lackdraht, der mit einem Elektroisolierlack aus zumindest einem Lackpolymer beschichtet ist. AT 278 940 B betrifft ein Verfahren zum Isolieren dünner elektrischer Leiter. US 2012/0241191 A1 offenbart ein Beschichtungsmaterial für einen Draht. US 2011/0171368 A1 beschreibt ein Verfahren zur Beschichtung eines Drahtes. Es ist beispielsweise bekannt, Elektroisolierlacke als Nasslack in einem Lackbad auf einen Leiterdraht aufzutragen und anschließend in einem Aushärtungsschritt das in dem Nasslack enthaltene Lösungsmittel durch Erwärmung zu entfernen. Üblicherweise werden auf diese Art mehrere Elektroisolierlackschichten zur Ausbildung einer Elektroisolierlackbeschichtung auf den Leiterdraht aufgetragen. Bei den aus der Praxis bekannten Verfahren hat sich allerdings gezeigt, dass die resultierenden Elektroisolierlackbeschichtungen entlang des Querschnittsumfangs der Leiterdrähte oftmals ungleichmäßig aufgetragen sind. Insoweit variiert die Schichtdicke der Elektroisolierlackbeschichtungen entlang des Querschnittsumfanges der Leiterdrähte. Es werden mit den bekannten Maßnahmen somit oftmals Drahtbeschichtungen erhalten, die an einigen Stellen des Querschnittsumfanges dicker ausgebildet sind, als an anderen Stellen. Dieses Problem ergibt sich insbesondere bei Flachdrähten. Besonders bei solchen Flachdrähten hat sich gezeigt, dass an den Schmal- und Breitseiten des Umfanges Wülste und Stellen mit einer großen Lackschichtdicke des Elektroisolierlackes auftreten, während in den Übergangsbereichen bzw. Ecken die Drahtbeschichtung unvorteilhaft dünn ist. Dieser ungleichmäßige Auftrag der Elektroisolierlackbeschichtungen bzw. der Elektroisolierlackschichten auf Leiterdrähte und insbesondere Flachdrähte hat oftmals zur Folge, dass die mit Elektroisolierlack beschichteten Leiterdrähte die an sie gestellten Anforderungen - beispielsweise hinsichtlich ihrer elektrischen Durchschlagfestigkeit und/oder hinsichtlich ihrer mechanischen Beständigkeit - nicht in zufriedenstellender Art und Weise erfüllen können. Um diesem Problem entgegenzuwirken ist es bekannt und hat sich grundsätzlich bewährt, zunächst einen Runddraht mit einem Elektroisolierlack zu beschichten, da bei Runddrähten im Rahmen der bereits bekannten Maßnahmen eine gleichmäßigere Beschichtung mit Elektroisolierlacken möglich ist. Der beschichtete Runddraht wird anschließend zu einem Flachdraht gewalzt. Auf diese Weise ist es möglich, über den gesamten Querschnittsumfang des zum Flachdraht gewalzten Runddrahtes eine relativ gleichmäßige Schichtdicke des Elektroisolierlackes sicherzustellen. Allerdings ist dieser Fertigungsprozess aufwendig, wenig wirtschaftlich und zudem teilweise fehlerbehaftet, da nicht immer eine gleichmäßige Schichtdicke des Elektroisolierlackes entlang des gesamten Querschnittsumfanges des Flachdrahtes erreicht wird. - Insoweit besteht Verbesserungsbedarf.

Der Erfindung liegt demgegenüber das technische Problem zugrunde, ein Verfahren der eingangs genannten Art anzugeben, mit dem die vorstehend beschriebenen Nachteile vermieden werden können und mit dem insbesondere effektiv und funktionssicher eine gleichmäßige Schichtdicke des Elektroisolierlackes entlang des Querschnittsumfanges eines Leiterdrahtes - insbesondere eines Flachdrahtes - erreicht werden kann.

Zur Lösung des technischen Problems lehrt die Erfindung ein Verfahren zur Herstellung eines mit Elektroisolierlack beschichteten Leiterdrahtes, wobei zu zumindest einem Lackpolymer zumindest ein Thixotropierungsadditiv hinzugefügt wird, so dass ein viskoser, thixotroper Elektroisolierlack erhalten wird, wobei der thixotrope Lack - insbesondere mittels eines Scherungselementes - einer Scherkrafteinwirkung ausgesetzt wird, wobei die Scherkräfte eine temporäre Verflüssigung des thixotropen Lackes bewirken, wobei anschließend die Oberfläche eines Leiterdrahtes mit zumindest einer Lackschicht des verflüssigten thixotropen Lackes beschichtet wird, wobei die zumindest eine Lackschicht daraufhin, vorzugsweise durch Erwärmung, ausgehärtet wird,
wobei das Scherungselement eine Düse ist, durch die der thixotrope Elektroisolierlack geführt wird, wobei als Leiterdraht ein Flachdraht eingesetzt wird, wobei zumindest zwei Lackschichten des thixotropen Elektroisolierlackes auf den Leiterdraht aufgebracht werden und wobei die Schichtdicke d einer Lackschicht des Elektroisolierlackes zwischen 0,5 µm und 15 µm beträgt.

Elektroisolierlack meint im Rahmen der Erfindung insbesondere einen Lack, der auf einen Leiterdraht aufgetragen wird und nach seiner Aushärtung als Elektroisolierlackbeschichtung den Leiterdraht elektrisch isoliert. Anstelle des Begriffes Elektroisolierlack wird hier und nachfolgend auch einfach der Ausdruck Lack verwendet. Leiterdraht meint im Rahmen der Erfindung einen elektrischen Draht, insbesondere einen Metalldraht. Der mit Elektroisolierlack beschichtete Leiterdraht kann beispielsweise bei der Herstellung von elektrischen Bauteilen bzw. elektrischen Baukomponenten verwendet werden und zwar insbesondere für Spulen, Elektromotoren, Transformatoren und dergleichen Bauteile.

Thixotropierungsadditiv meint im Rahmen der Erfindung insbesondere einen Stoff, der dem zumindest einen Lackpolymer hinzugefügt wird und durch dessen Zugabe der Lack bzw. das Lackpolymer thixotrope Eigenschaften erhält, sodass ein viskoser, thixotroper Elektroisolierlack erhalten wird. Bei einem Lack mit thixotropen Eigenschaften bzw. bei einem thixotropen Fluid nimmt im Zuge einer Scherkrafteinwirkung mit der Zeit die Viskosität ab. Nach Beendigung der Scherkrafteinwirkung steigt die Viskosität zeitabhängig wieder an und erreicht ihren Anfangswert. Die Viskosität eines thixotropen Lackes bzw. eines thixotropen Fluides wird also gleichsam durch Scherkrafteinwirkung reversibel gesenkt. Ein thixotroper Lack bzw. ein thixotropes Fluid kann somit durch eine Scherkrafteinwirkung temporär und reversibel verflüssigt werden.

Nach der erfindungsgemäßen Hinzugabe eines Thixotropierungsadditives zu einem Elektroisolierlack aus zumindest einem Lackpolymer resultiert zunächst ein viskoser, thixotroper Lack, der aufgrund seiner thixotropen Eigenschaften durch eine Scherkrafteinwirkung - insbesondere durch ein Scherungselement bzw. durch Wechselwirkung mit einem Scherungselement - temporär verflüssigt werden kann. Dieser verflüssigte thixotrope Lack wird im Rahmen des erfindungsgemäßen Verfahrens dann auf einen Leiterdraht aufgetragen. Nach bzw. unmittelbar nach der Auftragung des verflüssigten thixotropen Lackes kann durch ein Nachlassen der Scherkrafteinwirkung - beispielsweise indem keine Wechselwirkung des thixotropen Lackes mit dem Scherungselement mehr besteht - erreicht werden, dass die Viskosität des thixotropen Lackes wieder ansteigt, und zwar vorzugsweise auf ihren Ausgangswert bzw. im Wesentlichen auf ihren Ausgangswert. Es liegt im Rahmen der Erfindung, dass der thixotrope Lack während der Beschichtung des Leiterdrahtes bzw. während der Auftragung des Elektroisolierlackes auf den Leiterdraht aufgrund einer Scherkrafteinwirkung durch ein Scherungselement verflüssigt ist und nach bzw. unmittelbar nach der Auftragung aufgrund nachlassender Scherkrafteinwirkung durch das Scherungselement bzw. beendeter Scherkrafteinwirkung durch das Scherungselement wieder in die ursprüngliche Viskosität zurückkehrt.

Erfindungsgemäß ist das Scherungselement eine Düse, vorzugsweise eine Lackierdüse, durch die der thixotrope Elektroisolierlack geführt wird. Zweckmäßigerweise ist der viskose, thixotrope Elektroisolierlack dann ein lösemittelhaltiger Nasslack. Dieser Ausführungsform liegt die Erkenntnis zugrunde, dass durch das Wechselwirken des zunächst viskosen, thixotropen Elektroisolierlackes mit einer Düse bzw. einer Lackierdüse Scherkräfte auf den thixotropen Elektroisolierlack wirken, die eine temporäre Verflüssigung des thixotropen Elektroisolierlackes bewirken. Nach dem Durchtritt durch die Düse, bzw. die Lackierdüse lässt die Scherkrafteinwirkung nach, da der verflüssigte thixotrope Elektroisolierlack nicht mehr mit der Düse bzw. Lackierdüse wechselwirkt und in der Folge steigt die Viskosität des thixotropen Lackes an. Vorzugsweise steigt die Viskosität des thixotropen Lackes wieder auf die Ausgangsviskosität bzw. im Wesentlichen auf die Ausgangsviskosität an.

Es liegt im Rahmen der Erfindung, dass der Leiterdraht zusammen mit dem thixotropen Lack, bevorzugt kontinuierlich, durch das Scherungselement bzw. durch die Lackierdüse geführt wird. Eine besonders bevorzugte Ausführungsform des erfindungsgemäßen Verfahrens ist dadurch gekennzeichnet, dass das Scherungselement eine Lackierdüse ist und dass der Leiterdraht zusammen mit dem thixotropen Lack - empfohlenermaßen kontinuierlich - durch die Lackierdüse geführt wird. Dieser Ausführungsform liegt insbesondere die Erkenntnis zugrunde, dass dann der zunächst viskose, thixotrope Lack aufgrund der Wechselwirkung mit der Lackierdüse einer Scherkrafteinwirkung ausgesetzt wird, wobei die Scherkräfte eine temporäre Verflüssigung des thixotropen Lackes bewirken. Gleichzeitig mit dem thixotropen Lack wird - bevorzugt kontinuierlich - der Leiterdraht durch die Lackierdüse geführt und insoweit wird der Leiterdraht unmittelbar mit dem verflüssigten thixotropen Lack bzw. mit zumindest einer Lackschicht des verflüssigten thixotropen Lackes beschichtet. Nach bzw. unmittelbar nach dem Austritt des mit dem verflüssigten thixotropen Lack beschichteten Leiterdrahtes aus der Lackierdüse lässt die Scherkrafteinwirkung auf den Lack nach, da keine Wechselwirkung mehr mit der Lackierdüse besteht und in der Folge steigt die Viskosität des Lackes an und zwar bevorzugt auf die Ausgangsviskosität. Aufgrund des nach bzw. unmittelbar nach dem Austritt aus der Lackierdüse erfolgenden Viskositätsanstieges des thixotropen Lackes wird ein Verlaufen des aufgetragenen Lackes bzw. der aufgetragenen Lackschicht im Rahmen der Erfindung nahezu vollständig verhindert, so dass ein gleichmäßiger Auftrag des Elektroisolierlackes bzw. einer Lackschicht des Elektroisolierlackes auf den Leiterdraht resultiert.

Es empfiehlt sich in diesem Zusammenhang, dass der Leiterdraht zunächst durch ein Reservoir geführt wird, in dem der viskose, thixotrope Lack, vorzugsweise als lösemittelhaltiger Nasslack, vorrätig gehalten wird. Bei der Führung des Leiterdrahtes durch das Reservoir erfolgt demnach bereits ein erster Kontakt des Leiterdrahtes mit dem thixotropen Lack, bei dem der thixotrope Lack jedoch keiner nennenswerten Scherkrafteinwirkung ausgesetzt wird. Nachfolgend wird der Leiterdraht dann gemäß bevorzugter Ausführungsform zusammen mit dem thixotropen Lack, besonders bevorzugt kontinuierlich, durch die Lackierdüse geführt. Dabei wird der überschüssige Lack gleichsam abgestriffen und es erfolgt eine Scherkrafteinwirkung auf den thixotropen Lack. Nach der Auftragung des Elektroisolierlackes bzw. der zumindest einen Elektroisolierlackschicht erfolgt dann bevorzugt die Aushärtung des Elektroisolierlackes bzw. der Elektroisolierlackschicht, besonders bevorzugt durch Erwärmung. Wenn der Elektroisolierlack als lösemittelhaltiger Nasslack aufgetragen wird, dann wird im Zuge der Aushärtung das Lösemittel entfernt.

Es liegt im Übrigen auch im Rahmen der Erfindung, dass der thixotrope Elektroisolierlack durch ein Extrusionsverfahren auf den Leiterdraht aufgetragen wird bzw. dass mehrere Elektroisolierlackschichten durch ein Koextrusionsverfahren auf den Leiterdraht aufgebracht werden. Dann wirkt die Extrusionsdüse bzw. wirken die Extrusionsdüsen als Scherungselement. Grundsätzlich kann der thixotrope Elektroisolierlack auch als lösemittelhaltiger Nasslack über ein Filz auf den Leiterdraht aufgetragen werden. Dann wirkt das Filz als Scherungselement.

Eine besonders bevorzugte Ausführungsform des erfindungsgemäßen Verfahrens ist dadurch gekennzeichnet, dass ein Leiterdraht eingesetzt wird, der aus Kupfer und/oder Aluminium bzw. im Wesentlichen aus Kupfer und/oder Aluminium besteht. Grundsätzlich kann der Draht auch aus einer Legierung mit Kupfer und/oder Aluminium bzw. im Wesentlichen aus einer Legierung mit Kupfer und/oder Aluminium bestehen. Prinzipiell ist der Einsatz beliebiger Metalle als Leiterdraht möglich.

Erfindungsgemäß wird als Leiterdraht ein Flachdraht eingesetzt. Flachdraht meint im Rahmen der Erfindung insbesondere einen Draht mit einem Querschnitt (quer zur Längserstreckung des Drahtes), der eine größere Breitenerstreckung im Vergleich zu seiner Höhenerstreckung aufweist. Bevorzugt weist der Flachdraht einen Querschnitt in Form eines Rechteckes bzw. eines Rechteckes mit abgerundeten Ecken auf. Grundsätzlich kann der Flachdraht auch einen ovalen, trapezförmigen oder dergleichen Querschnitt aufweisen. - Es ist prinzipiell auch möglich, im Rahmen des erfindungsgemäßen Verfahrens anstelle eines Flachdrahtes Runddrähte oder Profildrähte als Leiterdrähte einzusetzen.

Nach besonders bevorzugter Ausführungsform der Erfindung ist das Lackpolymer auf Basis zumindest einer Komponente ausgewählt aus der Gruppe: "Polyester, Polyesterimid, Polyesteramidimid, Polyurethan, Polyamid, Polyamidimid, Polyimid" ausgebildet. Es liegt im Rahmen der Erfindung, dass der Elektroisolierlack auf Basis einer Mischung aus zumindest zwei der vorstehend genannten Komponenten ausgebildet ist. Zweckmäßigerweise enthält der Elektroisolierlack bzw. das Lackpolymer zumindest einen Füllstoff. Bei dem zumindest einen Füllstoff kann es sich um einen isolierenden Füllstoff und/oder um einen leitfähigen Füllstoff handeln. Vorzugsweise wird als isolierender Füllstoff zumindest ein aus der Gruppe: "Glimmer, Kaolin, Korund, Edelkorund, Silikate, Aluminiumoxide, Sulfate, Siliciumdioxide, Titandioxide" ausgewählter Stoff eingesetzt. Es liegt im Rahmen der Erfindung, dass als leitfähiger Füllstoff zumindest ein aus der Gruppe: "Anorganisches Halbleitermaterial, organisches Halbleitermaterial, leitfähiges Kohlenstoffmaterial" ausgewählter Stoff eingesetzt wird. Zweckmäßigerweise wird als leitfähiger Füllstoff ein keramischen Halbleitermaterial, vorzugsweise ausgewählt aus der Gruppe: "Carbide, Silizide, Nitride, Oxide, Titanate" eingesetzt.

Erfindungsgemäß werden zumindest zwei, vorzugsweise zumindest drei Lackschichten des thixotropen Elektroisolierlackes auf den Leiterdraht aufgebracht. Vorzugsweise wird jede Lackschicht nach der Auftragung auf den Leiterdraht ausgehärtet. Es empfiehlt sich, dass diese Aushärtung durch Erwärmung stattfindet. Insbesondere wenn der thixotrope Elektroisolierlack als lösemittelhaltiger Nasslack auf den Leiterdraht aufgebracht wird, erfolgt die Aushärtung vorzugsweise durch Erwärmung, um das Lösungsmittel aus dem Elektroisolierlack bzw. aus der Lackschicht zu entfernen bzw. im Wesentlichen zu entfernen. Grundsätzlich liegen auch andere Arten der Aushärtung, beispielsweise eine UV-Aushärtung im Rahmen der Erfindung.

Wenn gemäß bevorzugter Ausführungsform mehrere Lackschichten des thixotropen Elektroisolierlackes auf den Leiterdraht aufgetragen bzw. aufgebracht werden, dann bilden diese Elektroisolierlackschichten nach der Aushärtung die Elektroisolierlackbeschichtung des Leiterdrahtes. Es liegt im Rahmen der Erfindung, dass maximal 40, bevorzugt maximal 35, besonders bevorzugt maximal 30 Lackschichten des thixotropen Elektroisolierlackes auf den Leiterdraht aufgebracht werden.

Gemäß einer bevorzugten Ausführungsform wird der thixotrope Elektroisolierlack direkt auf den zuvor unbeschichteten Leiterdraht aufgetragen und vorzugsweise werden daraufhin weitere Lackschichten des thixotropen Elektroisolierlackes auf den Leiterdraht aufgebracht. Grundsätzlich kann der Leiterdraht auch bereits mit einer Basisbeschichtung versehen sein, auf die dann die Lackschichten des thixotropen Elektroisolierlackes aufgebracht werden. Es ist fernerhin möglich, dass nach der Auftragung der einzelnen Lackschichten des thixotropen Elektroisolierlackes eine Abschlussschicht aus einem Sekundärlack auf den Leiterdraht aufgebracht wird. Grundsätzlich kann der Leiterdraht auch mit mehreren verschiedenen thixotropen Elektroisolierlacken bzw. Elektroisolierlackschichten beschichtet werden, beispielsweise können auch die zuvor erwähnte Basisschicht und/oder die Abschlussschicht als thixotrope Lacke bzw. Elektroisolierlacke auf den Leiterdraht aufgebracht werden. Es ist auch möglich, dass zwischen den einzelnen Lackschichten des thixotropen Elektroisolierlackes Schichten eines Lackes aufgebracht werden, der kein Thixotropierungsadditiv aufweist und/oder dass zwischen den erfindungsgemäßen Lackschichten des thixotropen Elektroisolierlackes Lackschichten eines anderen thixotropen Elektroisolierlackes aufgebracht werden.

Es empfiehlt sich, dass die Gesamtschichtdicke der ausgehärteten Elektroisolierlackbeschichtung zwischen 2 µm und 200 µm, vorzugsweise zwischen 3 µm und 150 µm, bevorzugt zwischen 3,5 µm und 120 µm beträgt. Gesamtschichtdicke meint in diesem Zusammenhang insbesondere die summierte Schichtdicke der einzelnen Elektroisolierlackschichten nach der Aushärtung. Schichtdicke bzw. Dicke der Schicht meint im Rahmen der Erfindung insbesondere die Ausdehnung der Schicht quer zur Längsrichtung des mit Elektroisolierlack beschichteten Leiterdrahtes.

Erfindungsgemäß beträgt die Schichtdicke d einer Lackschicht des Elektroisolierlackes zwischen 0,5 µm und 15 µm, bevorzugt zwischen 1 µm und 10 µm, besonders bevorzugt zwischen 2 µm und 5 µm. Es liegt im Rahmen der Erfindung, dass die einzelnen Lackschichten des Elektroisolierlackes die gleiche Schichtdicke d bzw. im Wesentlichen die gleiche Schichtdicke d besitzen.

Nach einer bewährten Ausführungsform der Erfindung wird als Thixotropierungsadditiv zumindest eine Komponente ausgewählt aus der Gruppe: "organophile Bentonite, organophile Schichtsilikate, pyrogene Kieselsäuren, Polyharnstoffe, harnstoffmodifizierte Polyamide, Cellulosederivate" eingesetzt. Es liegt im Rahmen der Erfindung, dass als Thixotropierungsadditiv eine Mischung aus zumindest zwei der vorstehend genannten Komponenten eingesetzt wird.

Es empfiehlt sich, dass dem zumindest einen Lackpolymer zwischen 0,01 Gew.-% und 10,0 Gew.-%, vorzugsweise zwischen 0,05 Gew-% und 5,0 Gew.-%, bevorzugt zwischen 0,1 Gew.-% und 3,0 Gew.-% und besonders bevorzugt zwischen 0,5 Gew.-% und 2,0 Gew.-%, beispielsweise zwischen 1,0 Gew.-% und 1,5 Gew.-% des zumindest einen Thixotropierungsadditives zur Ausbildung eines viskosen, thixotropen Elektroisolierlackes hinzugefügt wird. Dieser Ausführungsform liegt die Erkenntnis zugrunde, dass mit einem solchen Massenanteil des Thixotropierungadditives besonders vorteilhafte Eigenschaften des thixotropen Elektroisolierlackes erzielt werden können. Der thixotrope Elektroisolierlack ist dann vorzugsweise zunächst hochviskos und wird im Zuge einer Scherkrafteinwirkung - insbesondere durch ein Scherungselement - temporär verflüssigt. Wenn anschließend keine Scherkrafteinwirkung des Scherungselementes mehr vorliegt, kehrt der Lack bzw. die Lackbeschichtung sehr rasch zur Ausgangsviskosität zurück. Dies ist im Rahmen des erfindungsgemäßen Verfahrens besonders vorteilhaft.

Gegenstand der Erfindung ist weiterhin ein Elektroisolierlack zur Herstellung eines mit Elektroisolierlack beschichteten Leiterdrahtes, insbesondere im Rahmen des vorstehend beschriebenen Verfahrens, wobei der Lack auf Basis zumindest eines Lackpolymers ausgewählt aus der Gruppe: "Polyester, Polyesterimid, Polyesteramidimid, Polyurethan, Polyamid, Polyamidimid, Polyimid" ausgebildet ist, wobei der Lack ein Thixotropierungsadditiv aufweist und wobei der Lack durch Scherkrafteinwirkung temporär verflüssigt werden kann.

Es liegt im Rahmen der Erfindung, dass der Elektroisolierlack als Thixotropierungsadditiv zumindest eine Komponente ausgewählt aus der Gruppe: "organophile Bentonite, organophile Schichtsilikate, pyrogene Kieselsäuren, Polyharnstoffe, harnstoffmodifizierte Polyamide, Cellulosederivate" aufweist.

Es empfiehlt sich, dass der Lack bzw. der thixotrope Lack zwischen 0,01 Gew.-% und 10,0 Gew.-%, vorzugsweise zwischen 0,05 Gew.-% und 5,0 Gew.-%, bevorzugt zwischen 0,1 Gew.-% und 3,0 Gew.-% und besonders bevorzugt zwischen 0,5 Gew.-% und 2,0 Gew.-%, beispielsweise zwischen 1,0 Gew.-% und 1,5 Gew.-% des zumindest einen Thixotropierungsadditives enthält.

Der Erfindung liegt die Erkenntnis zugrunde, dass mit dem erfindungsgemäßen Verfahren ein mit Elektroisolierlack beschichteter Leiterdraht hergestellt werden kann, der sich durch eine überraschend gleichmäßige Auftragung der Elektroisolierlackbeschichtung bzw. der einzelnen Elektroisolierlackschichten entlang des Querschnittsumfangs des Leiterdrahtes auszeichnet. Aufgrund des zumindest einen Thixotropierungsadditives wird ein thixotroper Elektroisolierlack erhalten, der aufgrund seiner speziellen Eigenschaften im Rahmen des erfindungsgemäßen Verfahrens eine besonders gleichmäßige Beschichtung eines Leiterdrahtes ermöglicht. Es ist insbesondere anzumerken, dass mit dem erfindungsgemäßen Verfahren Flachdrähte einfach und funktionssicher mit einer überraschend hohen Gleichmäßigkeit beschichtet werden können. Insbesondere können die bei den aus der Praxis bekannten Maßnahmen auftretenden Dünnstellen des Elektroisolierlackes in den Übergangsbereichen zwischen Schmalseiten und Breitseiten der Flachdrähte bzw. in den Ecken/Radien der Flachdrähte vermieden werden. Fernerhin kann die Ausbildung von Wülsten und Stellen mit unerwünscht dicker Elektroisolierlackbeschichtung, die bei den aus der Praxis bekannten Verfahren insbesondere im Bereich der Schmal- und Breitseiten auftreten, verhindert werden. Insoweit kann im Rahmen des erfindungsgemäßen Verfahrens direkt ein Flachdraht mit überraschend hoher Gleichmäßigkeit beschichtet werden, sodass der aufwendige Umweg über einen Runddraht, der zum Flachdraht gewalzt wird, vermieden werden kann. Im Rahmen des erfindungsgemäßen Verfahrens ist der Lack aufgrund seiner thixotropen Eigenschaften nur kurzzeitig verflüssigt, nämlich zu dem Zeitpunkt, in dem er auf die Drahtoberfläche aufgetragen wird. Unmittelbar nach dem Auftrag des thixotropen Elektroisolierlackes kehrt der Lack vorzugsweise aufgrund nachlassender Scherkräfte wieder in seine Ausgangsviskosität zurück und auf diese Weise kann überraschend einfach und funktionssicher ein Verlaufen des Elektroisolierlackes bei der Drahtbeschichtung vermieden werden. Aus diesem Grund ist es mit dem erfindungsgemäßen Verfahren möglich, eine besonders gleichmäßige Auftragung des Elektroisolierlackes bzw. der Elektroisolierlackschichten entlang des Querschnittsumfangs eines Leiterdrahtes und insbesondere eines Flachdrahtes zu gewährleisten. Es ist fernerhin anzumerken, dass das erfindungsgemäße Verfahren sich durch Einfachheit und Funktionssicherheit und insoweit auch durch eine hohe Wirtschaftlichkeit auszeichnet, da die erfindungsgemäßen Maßnahmen wenig aufwendig sind.

Nachfolgend wird die Erfindung anhand einer lediglich ein Ausführungsbeispiel darstellenden Zeichnung ergänzend erläutert.

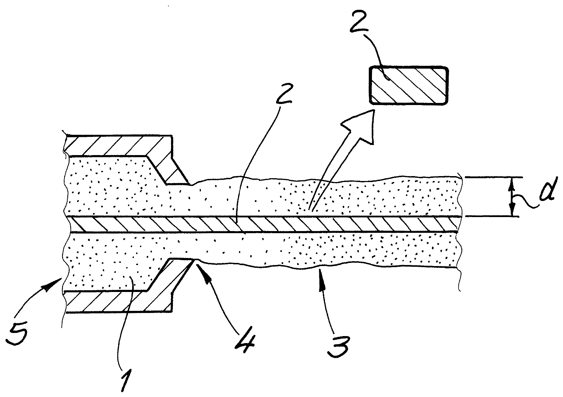

Die einzige Figur zeigt schematisch eine Vorrichtung zur Beschichtung eines Leiterdrahtes mit einem thixotropen Elektroisolierlack im Rahmen des erfindungsgemäßen Verfahrens.

Es ist schematisch die Auftragung des thixotropen Elektroisolierlackes **1** auf den Leiterdraht **2** dargestellt. Der Leiterdraht **2** wird zunächst durch ein Reservoir **5** geführt, in dem der viskose, thixotrope Elektroisolierlack **1** vorrätig gehalten wird. Beim Fördern des Leiterdrahtes **2** durch das Reservoir **5** kommt der Leiterdraht **2** bereits in Kontakt mit dem thixotropen Elektroisolierlack **1,** ohne dass der Lack einer nennenswerten Scherkrafteinwirkung ausgesetzt ist. Erfindungsgemäß wird der thixotrope Lack **1** - insbesondere mittels eines Scherungselementes - einer Scherkrafteinwirkung ausgesetzt, wobei die Scherkräfte eine temporäre Verflüssigung des thixotropen Lackes **1** bewirken. Vorzugsweise und im Ausführungsbeispiel ist das Scherungselement eine Lackierdüse **4,** durch die der Leiterdraht **2** ganz besonders bevorzugt und im Ausführungsbeispiel zusammen mit dem thixotropen Lack **1** kontinuierlich geführt wird. Durch das Zusammenwirken des thixotropen Lackes **1** mit der Lackierdüse **4** wird der thixotrope Lack **1** einer Scherkrafteinwirkung ausgesetzt und verflüssigt sich. Der Leiterdraht **2** wird bevorzugt und im Ausführungsbeispiel unmittelbar mit dem verflüssigten thixotropen Lack **1** bzw. mit einer Lackschicht **3** des verflüssigten thixotropen Lackes **1** beschichtet. Empfohlenermaßen und im Ausführungsbeispiel lässt unmittelbar nach der Beschichtung bzw. der Auftragung des verflüssigten thixotropen Lackes **1** bzw. einer Lackschicht **3** des verflüssigten thixotropen Lackes **1** auf den Leiterdraht **2** die Scherkrafteinwirkung nach, da der mit dem thixotropen Lack **1** bzw. mit einer Lackschicht **3** des thixotropen Lackes **1** beschichtete Leiterdraht **2** die Lackierdüse **4** verlässt bzw. aus der Lackierdüse **4** austritt und in der Folge keiner Scherkrafteinwirkung mehr ausgesetzt ist. Dann steigt die Viskosität des thixotropen Lackes **1** vorzugsweise wieder auf die Ausgangsviskosität an. Zweckmäßigerweise wird die zumindest eine Lackschicht **3** daraufhin, vorzugsweise durch Erwärmung, ausgehärtet. Dies ist in der Figur nicht näher dargestellt.

Es empfiehlt sich, dass im Rahmen des erfindungsgemäßen Verfahrens ein Leiterdraht **2** eingesetzt wird, der aus Kupfer und/oder Aluminium bzw. im Wesentlichen aus Kupfer und/oder Aluminium besteht. Im Ausführungsbeispiel gemäß der Figur mag der Leiterdraht beispielsweise aus Kupfer bestehen. Vorzugsweise und im Ausführungsbeispiel wird als Leiterdraht im Übrigen ein Flachdraht eingesetzt, der ganz besonders bevorzugt und im Ausführungsbeispiel einen Querschnitt in Form eines Rechteckes mit abgerundeten Ecken aufweist.

Es liegt im Rahmen der Erfindung, dass die Schichtdicke d einer Lackschicht **3** des Elektroisolierlackes zwischen 1 µm und 10 µm, vorzugsweise zwischen 2 µm und 5 µm beträgt. Im Ausführungsbeispiel gemäß der Figur mag die Schichtdicke d der Lackschicht **3** des Elektroisolierlackes etwa 3 µm betragen.

## Patentansprüche

1. Verfahren zur Herstellung eines mit Elektroisolierlack beschichteten Leiterdrahtes, wobei zu zumindest einem Lackpolymer zumindest ein Thixotropierungsadditiv hinzugefügt wird, so dass ein viskoser, thixotroper Elektroisolierlack (1) erhalten wird, wobei der thixotrope Lack (1) - insbesondere mittels eines Scherungselementes - einer Scherkrafteinwirkung ausgesetzt wird, wobei die Scherkräfte eine temporäre Verflüssigung des thixotropen Lackes (1) bewirken, wobei anschließend die Oberfläche eines Leiterdrahtes (2) mit zumindest einer Lackschicht (3) des verflüssigten thixotropen Lackes (1) beschichtet wird, wobei die zumindest eine Lackschicht (3) daraufhin, vorzugsweise durch Erwärmung, ausgehärtet wird,
wobei das Scherungselement eine Düse ist, durch die der thixotrope Elektroisolierlack (1) geführt wird, wobei als Leiterdraht (2) ein Flachdraht eingesetzt wird,
wobei zumindest zwei Lackschichten (3) des thixotropen Elektroisolierlackes (1) auf den Leiterdraht (2) aufgebracht werden und wobei die Schichtdicke d einer Lackschicht (3) des Elektroisolierlackes zwischen 0,5 µm und 15 µm beträgt.

2. Verfahren nach Anspruch 1, wobei das Scherungselement eine Lackierdüse (4) ist.

3. Verfahren nach einem der Ansprüche 1 oder 2, wobei der Leiterdraht (2) zusammen mit dem thixotropen Lack (1), bevorzugt kontinuierlich, durch das Scherungselement bzw. durch die Lackierdüse (4) geführt wird.

4. Verfahren nach einem der Ansprüche 1 bis 3, wobei ein Leiterdraht (2) eingesetzt wird, der aus Kupfer und/oder Aluminium bzw. im Wesentlichen aus Kupfer und/oder Aluminium besteht.

5. Verfahren nach einem der Ansprüche 1 bis 4, wobei das Lackpolymer auf Basis zumindest einer Komponente ausgewählt aus der Gruppe: "Polyester, Polyesterimid, Polyesteramidimid, Polyurethan, Polyamid, Polyamidimid, Polyimid" ausgebildet ist.

6. Verfahren nach einem der Ansprüche 1 bis 5, wobei zumindest drei Lackschichten (3) des thixotropen Elektroisolierlackes (1) auf den Leiterdraht (2) aufgebracht werden und/oder wobei maximal 40, bevorzugt maximal 35, besonders bevorzugt maximal 30 Lackschichten (3) des thixotropen Elektroisolierlackes (1) auf den Leiterdraht (2) aufgebracht werden.

7. Verfahren nach einem der Ansprüche 1 bis 6, wobei die Gesamtschichtdicke der ausgehärteten Elektroisolierlackbeschichtung zwischen 2 µm und 200 µm, vorzugsweise zwischen 3 µm und 150 µm, bevorzugt zwischen 3,5 µm und 120 µm beträgt.

8. Verfahren nach einem der Ansprüche 1 bis 7, wobei die Schichtdicke d einer Lackschicht (3) des Elektroisolierlackes zwischen 1 µm und 10 µm, besonders bevorzugt zwischen 2 µm und 5 µm beträgt.

9. Verfahren nach einem der Ansprüche 1 bis 8, wobei als Thixotropierungsadditiv zumindest eine Komponente ausgewählt aus der Gruppe: "organophile Bentonite, organophile Schichtsilikate, pyrogene Kieselsäuren, Polyharnstoffe, harnstoffmodifizierte Polyamide, Cellulosederivate" eingesetzt wird.

10. Verfahren nach einem der Ansprüche 1 bis 9, wobei dem zumindest einen Lackpolymer zwischen 0,01 Gew.-% und 10,0 Gew.-%, vorzugsweise zwischen 0,05 Gew.-% und 5,0 Gew.-%, bevorzugt zwischen 0,1 Gew.-% und 3,0 Gew.- und besonders bevorzugt zwischen 0,5 Gew.-% und 2,0 Gew.-%, beispielsweise zwischen 1,0 Gew.-% und 1,5 Gew.-% des zumindest einen Thixotropierungsadditives zur Ausbildung eines viskosen, thixotropen Elektroisolierlackes (1) hinzugefügt wird.

## Claims

1. A method for producing a conductor wire coated with electrical insulating varnish, wherein at least one thixotropy additive is added to at least one varnish polymer so that a viscous, thixotropic electrical insulating varnish (1) is obtained, wherein the thixotropic varnish (1) is subjected to the effects of shearing forces, in particular by means of a shearing element, wherein the shearing forces cause temporary liquefaction of the thixotropic varnish (1), wherein the surface of a conductor wire (2) is subsequently coated with at least one varnish layer (3) of the liquefied thixotropic varnish (1), wherein the at least one varnish layer (3) is then cured, preferably by heating,
wherein the shearing element is a nozzle through which the thixotropic electrical insulating varnish (1) is passed, wherein a flat wire is used as the conductor wire (2),
wherein at least two varnish layers (3) of the thixotropic electrical insulating varnish (1) are applied to the conductor wire (2) and wherein the layer thickness d of a varnish layer (3) of the electrical insulating varnish is between 0.5 µm and 15 µm.

2. The method according to claim 1, wherein the shearing element is a varnishing nozzle (4).

3. The method according to any one of claims 1 or 2, wherein the conductor wire (2) is guided through the shearing element or through the varnishing nozzle (4), preferably continuously, together with the thixotropic varnish (1).

4. The method according to any one of claims 1 to 3, wherein a conductor wire (2) consisting of copper and/or aluminium or consisting substantially of copper and/or aluminium is used.

5. The method according to any one of claims 1 to 4, wherein the varnish polymer is formed based on at least one component selected from the group: "polyester, polyesterimide, polyesteramideimide, polyurethane, polyamide, polyamideimide, polyimide".

6. The method according to any one of claims 1 to 5, wherein at least three varnish layers (3) of the thixotropic electrical insulating varnish (1) are applied to the conductor wire (2) and/or wherein a maximum of 40, preferably a maximum of 35, particularly preferably a maximum of 30, varnish layers (3) of the thixotropic electrical insulating varnish (1) are applied to the conductor wire (2).

7. The method according to any one of claims 1 to 6, wherein the total layer thickness of the cured electrical insulating varnish coating is between 2 µm and 200 µm, preferably between 3 µm and 150 µm, more preferably between 3.5 µm and 120 µm.

8. The method according to any one of claims 1 to 7, wherein the layer thickness d of a varnish layer (3) of the electrical insulating varnish is between 1 µm and 10 µm, particularly preferably between 2 µm and 5 µm.

9. The method according to any one of claims 1 to 8, wherein at least one component selected from the group: "organophilic bentonites, organophilic layered silicates, pyrogenic silicas, polyureas, urea-modified polyamides, cellulose derivatives" is used as the thixotropy additive.

10. The method according to any one of claims 1 to 9, wherein between 0.01% by weight and 10.0% by weight, preferably between 0.05% by weight and 5.0% by weight, more preferably between 0.1% by weight and 3.0% by weight, and particularly preferably between 0.5% by weight and 2.0% by weight, for example, between 1.0% by weight and 1.5% by weight of the at least one thixotropy additive is added to the at least one varnish polymer to form a viscous, thixotropic electrical insulating varnish (1).

## Revendications

1. Procédé, destiné à fabriquer un fil conducteur revêtu d'un émaillé électro-isolant, à au moins un polymère émaillé étant ajouté au moins un agent thixotrope, de sorte à obtenir un émaillé électro-isolant (1) thixotrope visqueux, l'émaillé thixotrope (1) étant exposé (notamment au moyen d'un élément de cisaillement) à l'effet d'une force de cisaillement, les forces de cisaillement provoquant notamment une liquéfaction temporaire de l'émaillé thixotrope (1), par la suite, la surface d'un fil conducteur (2) étant revêtue d'au moins une couche d'émaillé (3) de l'émaillé thixotrope (1) liquéfié, suite à quoi, l'au moins une couche d'émaillé (3) étant solidifiée, notamment par échauffement,
l'élément de cisaillement étant une buse, à travers laquelle est conduit l'émaillé électro-isolant (1) thixotrope, en tant que fil conducteur (2) étant mis en œuvre un fil plat,
au moins deux couches d'émaillé (3) de l'émaillé électro-isolant (1) thixotrope étant appliquées sur le fil conducteur (2) et l'épaisseur de couche d d'une couche d'émaillé (3) de l'émaillé électro-isolant se situant entre 0,5 µm et 15 µm.

2. Procédé selon la revendication 1, l'élément de cisaillement étant une buse d'émaillage (4).

3. Procédé selon l'une quelconque des revendications 1 ou 2, le fil conducteur (2) étant conduit conjointement avec l'émaillé thixotrope (1), de préférence en continu, à travers l'élément de cisaillement ou à travers la buse d'émaillage (4).

4. Procédé selon l'une quelconque des revendications 1 à 3, un fil conducteur (2) étant mis en œuvre qui est constitué de cuivre et/ou d'aluminium, ou majoritairement de cuivre et/ou d'aluminium.

5. Procédé selon l'une quelconque des revendications 1 à 4, le polymère émaillé étant constitué à base d'au moins un composant sélectionné dans le groupe « polyester, polyesterimide, polyester(amide)imide, polyuréthane, polyamide, polyamide-imide, polyimide ».

6. Procédé selon l'une quelconque des revendications 1 à 5, au moins trois couches d'émaillé (3) de l'émaillé électro-isolant (1) thixotrope étant appliquées sur le fil conducteur (2) et/ou au moins au maximum 40, de préférence au maximum 35, de manière particulièrement préférentielle, au maximum 30 couches d'émaillé (3) de l'émaillé électro-isolant (1) thixotrope étant appliquées sur le fil conducteur (2).

7. Procédé selon l'une quelconque des revendications 1 à 6, l'épaisseur totale de couche du revêtement en émaillé électro-isolant solidifié s'élevant à entre 2 µm et 200 µm, de préférence à entre 3 µm et 150 µm, de manière particulièrement préférentielle à entre 3,5 µm et 120 µm.

8. Procédé selon l'une quelconque des revendications 1 à 7, l'épaisseur de couche **d** d'une couche d'émaillé (3) de l'émaillé électro-isolant s'élevant à entre 1 µm et 10 µm, de manière particulièrement préférentielle à entre 2 µm et 5 µm.

9. Procédé selon l'une quelconque des revendications 1 à 8, en tant qu'agent thixotrope étant mis en œuvre au moins un composant, sélectionné dans le groupe « bentonites organophiles, silicates lamellaires organophiles, acides siliciques pyrogènes, polyurées, polyamides modifiés par urée, dérivés cellulosiques ».

10. Procédé selon l'une quelconque des revendications 1 à 9, à l'au moins un polymère émaillé étant ajoutés entre 0,01 % en poids et 10,0 % en poids, de préférence entre 0,05 % en poids et 5,0 % en poids, de manière préférentielle entre 0,1 % en poids et 3,0 % en poids et de manière particulièrement préférentielle, entre 0,5 % en poids et 2,0 % en poids, par exemple entre 1,0 % en poids et 1,5 % en poids de l'au moins un agent thixotrope, pour constituer un émaillé électro-isolant (1) thixotrope visqueux.
